# FASCICULE DE BREVET EUROPEEN

(11) **EP 2 681 065 B1**
(45) Date de publication et mention de la délivrance du brevet: **30.09.2015**
(21) Numéro de dépôt: 12710767.0
(22) Date de dépôt: 01.03.2012
(51) Int. Cl.: B60K 1/04, H01M 2/10

(54) **SYSTEME DE LIAISON D'UNE BATTERIE D'ALIMENTATION D'UN VEHICULE AUTOMOBILE**
SYSTEM FÜR DEN ANSCHLUSS EINES LEISTUNGSVERSORGUNGSBATTERIE AN EIN KRAFTFAHRZEUG
SYSTEM FOR CONNECTING A POWER-SUPPLY BATTERY OF A MOTOR VEHICLE

(30) Priorité: 01.03.2011 FR 1151629
(43) Date de publication de la demande: 08.01.2014
(73) Titulaire: Renault S.A.S., 92100 Boulogne-Billancourt (FR)
(72) Inventeur: FILLION, Thierry, F-78580 Bazemont (FR); FAURE, Jean-Yves, 78000 Versailles (FR); TRENTIN, Stéphane, 91170 VIRY CHATILLON (FR)
(86) Numéro de dépôt international: PCT/FR2012/000073
(87) Numéro de publication internationale: WO 2012/117173

(56) Documents cités:
- EP-A1- 0 780 915
- EP-A2- 0 616 913
- WO-A1-2010/064614
- DE-A1-102007 032 210
- DE-U1- 9 412 219
- US-A1- 2009 197 154

## Description

La présente invention se rapporte à un système de liaison d'un conteneur d'énergie de type batterie sur un véhicule automobile électrique. Par la suite, le terme batterie sera utilisé pour une raison de simplification. L'invention porte aussi sur un véhicule automobile en tant que tel comprenant une batterie fixée par un tel système de liaison au véhicule automobile. Enfin, l'invention porte aussi sur un système et procédé de remplacement d'une batterie ou de tout conteneur d'énergie d'un véhicule automobile incluant un tel système de liaison de batterie ainsi que sur une station de remplacement de batterie utilisant un tel système.

Certains véhicules automobiles, comme les véhicules électriques ou hybrides, comprennent une batterie pour l'alimentation d'un moteur d'entraînement électrique. La liaison d'une telle batterie au véhicule automobile est complexe car il faut assurer notamment une connexion électrique mais aussi une connexion d'un système de ventilation ou refroidissement de la batterie, qui a tendance à s'échauffer fortement lors de ses différentes phases d'utilisation.

D'autre part, selon une solution intéressante de l'état de la technique, il est prévu d'échanger cette batterie lorsque son niveau d'énergie est faible contre une nouvelle batterie chargée. Ceci peut être fait dans une station similaire à une station service dans laquelle on peut remplir un réservoir d'essence d'un véhicule automobile pourvu d'une chaîne de traction thermique.

Le document DE 94 12 2 194 décrit un système de liaison selon le préambule de la revendication 1.

On connaît du document US2010/0145717 une station d'échange de batterie électrique d'alimentation d'un moteur d'entraînement d'un véhicule électrique et un procédé pour réaliser un tel échange. Dans la station d'échange décrite, le conducteur positionne son véhicule sur une plateforme, et des moyens mobiles de dépose de la batterie électrique et d'assemblage de la nouvelle batterie au véhicule viennent réaliser l'échange de la batterie par le dessous du véhicule.

La batterie est fixée mécaniquement au véhicule par l'intermédiaire d'un boîtier. Ce document ne précise toutefois pas comment est réalisée la connexion électrique, ni comment serait mis en oeuvre une ventilation de la batterie.

Une difficulté pour la mise en place d'un tel concept d'échange de batteries réside dans le fait qu'il existe une multitude de véhicules automobiles pouvant comprendre des batteries de type différent, fixées de manière différente sur le véhicule automobile. Or, il n'est pas envisageable économiquement de multiplier les dispositifs automatiques de dépose et remplacement de ces différents types de batteries ni de mettre en place une solution manuelle en raison de son coût et du poids des batteries.

Ainsi, pour rendre possible un déploiement aisé des stations d'échange de batteries (nécessitant peu de compétence technologique), il est nécessaire de rendre fiable, robuste, flexible et universel le fonctionnement de ces stations et le procédé d'échange de batterie mis en oeuvre.

De manière plus générale, il est nécessaire de prévoir un système de liaison d'une batterie sur un véhicule automobile permettant la connexion électrique et la formation d'un système de ventilation de la batterie, permettant ainsi de délivrer l'énergie nécessaire de manière optimale au véhicule lors de son déplacement tout en garantissant le refroidissement suffisant de la batterie dans toutes ses phases d'utilisation, incluant des phases de charge. De plus, il est intéressant de prévoir un système de liaison d'une batterie compatible avec un nombre important d'opérations de montages et démontages de batteries.

Le but de l'invention est donc de fournir une solution de liaison d'une batterie sur un véhicule automobile qui permet le fonctionnement optimal de la batterie lors de sa configuration de fixation sur le véhicule automobile tout en permettant son montage et remplacement aisé, atteignant les objectifs mentionnés ci-dessus.

A cet effet, l'invention repose sur système de liaison entre une batterie d'alimentation et un véhicule automobile selon la revendication 1.

Le système de liaison entre une batterie d'alimentation et un véhicule automobile peut comprendre trois conduits sensiblement alignés dans une direction transversale vers l'arrière de la batterie, dont un conduit froid central apte à une arrivée d'un fluide caloporteur et deux conduits chauds latéraux aptes à une sortie du fluide caloporteur.

Les conduits pour la circulation d'un fluide caloporteur peuvent être fixés sur une première surface supérieure de la plaque de multi-connexions, elle-même fixée sous le plancher d'un véhicule automobile.

La batterie peut comprendre une surface supérieure comprenant des ouvertures entourées de joints d'étanchéité agencées pour correspondre aux ouvertures de la plaque de multi-connexions et permettre la connexion des conduits pour la circulation d'un fluide caloporteur avec un circuit de circulation intérieur de la batterie.

Le système de liaison entre une batterie d'alimentation et un véhicule automobile peut comprendre une surface plane latérale liée à la batterie et une surface latérale liée au plancher du véhicule automobile, prévues pour une liaison par des éléments de fixation.

Selon l'invention, la plaque de multi-connexions est liée au véhicule automobile dans une partie arrière du véhicule automobile, au niveau de l'assise du second rang prévue pour les passagers arrière du véhicule automobile.

La plaque de multi-connexions peut être fixée au plancher du véhicule automobile par des éléments de fixation délimitant un espace au-dessus de la surface supérieure de la plaque de multi-connexions pour le positionnement des conduits d'un fluide caloporteur et la fixation de conduits pour un fluide frigorigène.

Les éléments de fixation peuvent comprendre des éléments élastiques permettant une liaison souple au plancher du véhicule automobile pour compenser les dispersions du système de liaison.

Le système de liaison entre une batterie d'alimentation et un véhicule automobile peut comprendre une embase s'étendant vers l'avant de la batterie comprenant un connecteur électrique coopérant avec un connecteur électrique correspondant fixé sur le véhicule automobile.

Le système peut être apte à une connexion / déconnexion de la batterie dans une direction sensiblement verticale.

L'invention porte aussi sur un véhicule automobile comprenant une batterie d'alimentation d'un moyen d'entraînement, caractérisé en ce qu'il comprend un système de liaison de sa batterie d'alimentation tel que décrit précédemment.

Le véhicule automobile peut comprendre un climatiseur pour le refroidissement de l'habitacle du véhicule automobile et un climatiseur distinct pour le refroidissement de sa batterie d'alimentation.

Le climatiseur pour le refroidissement de sa batterie d'alimentation peut être disposé en arrière de la batterie d'alimentation et relié à la plaque de multi-connexions par les conduits de fluide caloporteur.

L'invention porte aussi sur un procédé de montage/démontage d'une batterie sur un véhicule automobile, caractérisé en ce qu'il comprend les étapes suivantes :
- Déplacement relatif dans une direction sensiblement verticale d'une batterie par rapport à une surface inférieure liée au véhicule automobile, par un dispositif de levage ;
- Connexion/déconnexion d'une liaison électrique entre deux connecteurs de respectivement une embase liée au véhicule et une partie haute de liaison électrique liée au véhicule automobile ;
- Connexion/déconnexion d'une liaison de ventilation vers la batterie entre une surface supérieure de la batterie et une plaque de multi-connexions d'un système de liaison tel que décrit précédemment servant d'interface entre la batterie et un climatiseur ;
- Connexion/déconnexion mécanique d'éléments de fixation de la batterie sur le véhicule automobile.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente une vue simplifiée de côté en coupe d'un véhicule automobile dont la batterie est reliée au véhicule par un système de liaison selon un mode de réalisation de l'invention.
La figure 2 représente une vue éclatée de dessus d'une partie de le système de liaison d'une batterie sur un véhicule automobile selon le mode de réalisation de l'invention.
La figure 3 représente une vue de dessus d'une partie du système de liaison d'une batterie sur un véhicule automobile selon le mode de réalisation de l'invention.
La figure 4 représente une vue simplifiée de la ventilation de l'intérieur d'une batterie selon le mode de réalisation de l'invention.
La figure 5 représente une vue simplifiée en coupe transversale d'une partie du système de liaison d'une batterie sur un véhicule automobile en configuration de non fixation selon le mode de réalisation de l'invention.
La figure 6 représente une vue simplifiée en coupe transversale d'une partie du système de liaison d'une batterie sur un véhicule automobile en configuration de fixation selon le mode de réalisation de l'invention.
La figure 7 représente une vue simplifiée en coupe transversale d'une partie du système de liaison de la batterie sur le véhicule automobile en configuration de fixation selon une variante du mode de réalisation de l'invention.

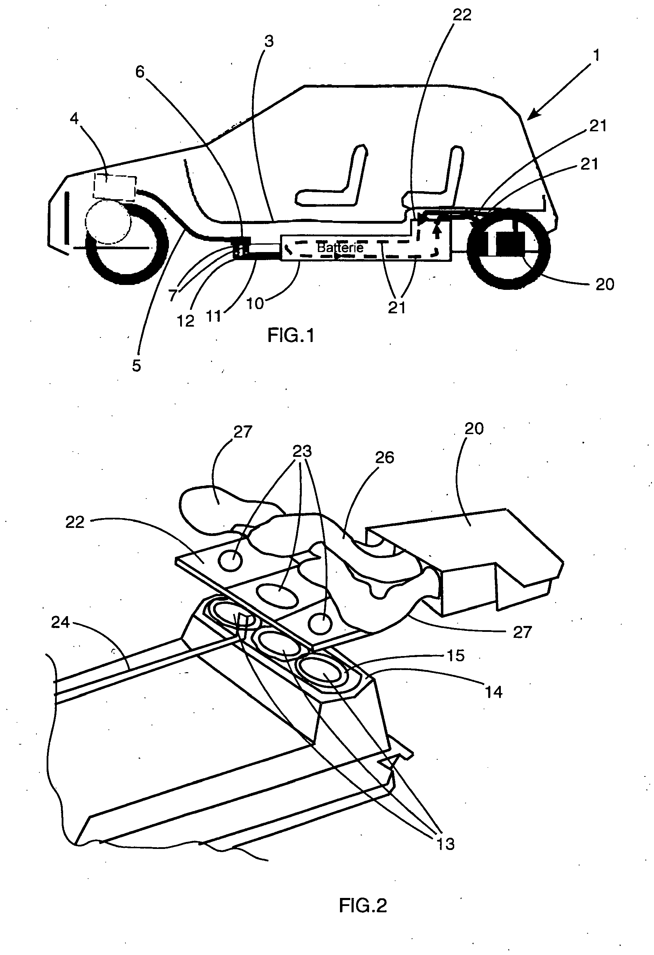

La figure 1 représente un véhicule automobile 1 équipé d'une batterie 10 dans une configuration de fixation au véhicule automobile, fixée de manière amovible sous son plancher 3, dans une zone relativement centrale. Le véhicule automobile 1 comprend un moyen d'entraînement 4 électrique, relié par une liaison électrique 5 à la batterie 10. Pour permettre la fixation de la batterie 10, un système de liaison particulier est prévu, comprenant notamment d'une part une liaison au niveau d'un dispositif de ventilation pour la mise en oeuvre du refroidissement de la batterie et d'autre part une liaison électrique pour permettre l'alimentation du moyen d'entraînement 4 du véhicule automobile.

Selon le mode de réalisation, le dispositif de ventilation de la batterie 10 comprend un climatiseur 20 extérieur à la batterie 10, qui comprend notamment un évaporateur et un ventilateur pour générer un flux de fluide caloporteur 21, qui est de l'air dans ce mode de réalisation, qui remplit une fonction de refroidissement en traversant le volume intérieur de la batterie 10.Le système de liaison de la batterie permet de former le dispositif de ventilation de la batterie, qui comprend une partie interne à la batterie et une partie extérieure, fixée au véhicule automobile. Ce système de liaison comprend une plaque de multi-connexions 22, disposée entre la batterie 10 et le climatiseur 20 et servant d'interface, particulièrement visible sur la figure 2, qui comprend trois ouvertures 23 disposées sensiblement dans un même plan et sensiblement alignées dans une direction transversale au véhicule automobile, pour recevoir trois conduits 26, 27 provenant du climatiseur 20 et pour positionner leurs extrémités dans un même plan, et permettre leur connexion avec une surface plane supérieure 14 en partie arrière du boîtier de la batterie 10, qui comprend des ouvertures correspondantes 13 entourées par des joints d'étanchéité fixes 15, pour finalement pouvoir fermer le circuit de circulation du fluide caloporteur.

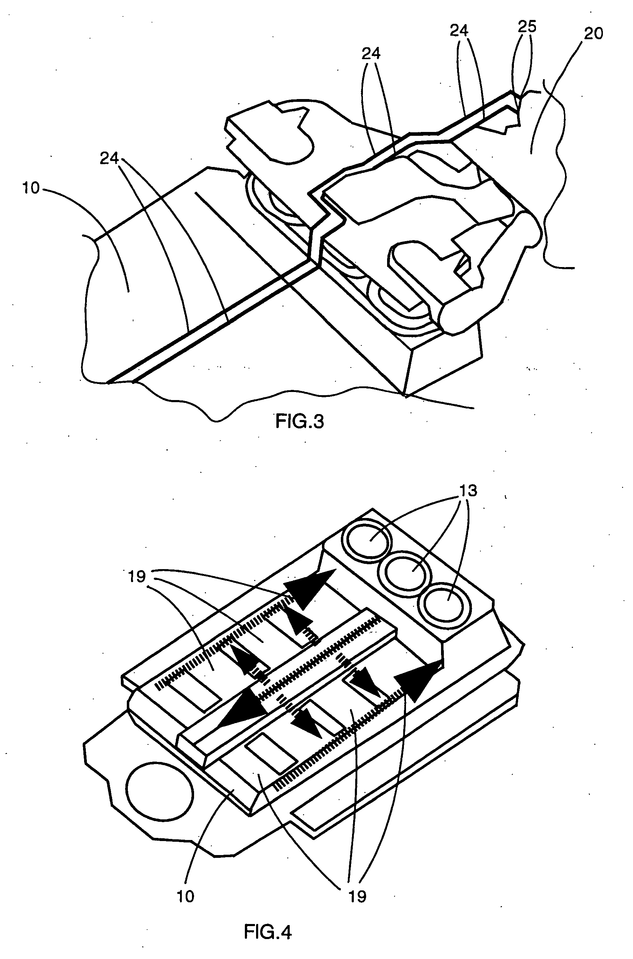

Ce circuit du fluide caloporteur est un circuit fermé, dédié au refroidissement de la batterie. Le fluide caloporteur est refroidi au niveau du climatiseur 20 à partir d'un fluide frigorigène alimenté par des tuyaux 24 qui parcourent une partie de la surface sous le plancher 3 du véhicule, puis sont fixés sur la surface supérieure de la plaque de multi-connexions 22 pour finalement rejoindre le climatiseur 20 au niveau de liaisons 25, comme cela est visible sur la figure 3.

Le circuit de refroidissement de la batterie comprend d'abord un conduit froid 26, pour conduire le fluide caloporteur froid depuis le climatiseur 20 jusqu'à la batterie 10. Ce conduit froid 26 est fixé dans la zone centrale de la plaque de multi-connexions 22. Ensuite, le circuit de refroidissement comprend deux conduits chauds 27, fixés sur les zones latérales de la plaque de multi-connexions 22, qui évacuent le fluide caloporteur qui a été réchauffé lors de son parcours au sein de la batterie, et le retournent vers le climatiseur 20, pour être refroidi de nouveau au sein par exemple d'un évaporateur. Ce système de ventilation est donc un système dédié et autonome, comprenant un fluide caloporteur propre circulant dans un circuit fermé et refroidi par un climatiseur dédié 20, positionné en partie arrière sous le plancher 3 du véhicule et distinct du climatiseur utilisé pour le refroidissement de l'habitacle du véhicule.

La figure 4 illustre plus précisément le flux de fluide caloporteur 21 au sein du volume de la batterie. Il arrive dans ce volume intérieur depuis le conduit froid 26, donc par l'ouverture 13 centrale de sa surface supérieure de sorte de parcourir toute la longueur de la batterie, dans sa zone centrale, de l'arrière vers l'avant. Une partie de ce fluide s'échappe latéralement au cours de ce déplacement longitudinal, dans une direction latérale, puis revient dans la direction longitudinale vers l'arrière au niveau des deux parties latérales de la batterie, jusqu'à rejoindre les ouvertures 13 latérales destinées à une liaison avec les conduits chauds 27 latéraux. Cela génère donc un flux de fluide caloporteur 21 qui parcourt au mieux les différentes surfaces autour des cellules de génération d'énergie 19 de la batterie 10.

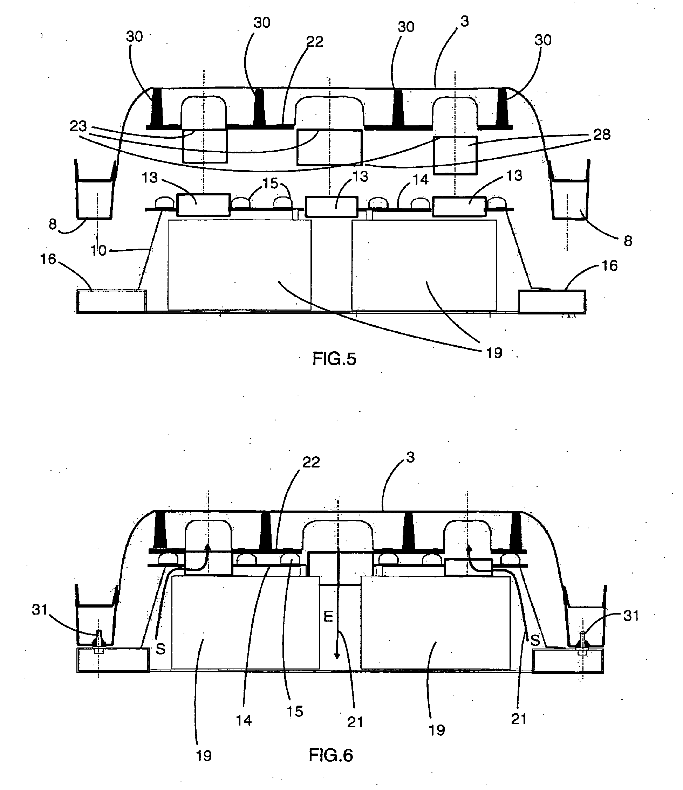

La liaison amovible de la batterie 10 sur le véhicule automobile est plus précisément illustrée par les figures 5 et 6 représentant des coupes transversales au niveau de la plaque de multi-connexions 22.

La figure 5 illustre une configuration dans laquelle la batterie 10 est dissociée du véhicule automobile. L'agencement montre le plancher du véhicule automobile 3, sur lequel est fixée la plaque de multi-connexions 22, au niveau de l'assise du second rang prévu pour les passagers arrière, comme cela apparaît sur la figure 1. Les différents conduits froid 26 et chauds 27 sont fixés à la surface supérieure de cette plaque, en provenance du climatiseur, et sont donc compris dans un volume entre la plaque 22 et le plancher 3 du véhicule, délimité par des éléments de fixation 30. Des prolongements 28 de ces conduits 26, 27, s'étendent au-delà de la plaque de multi-connexions 22, dans une direction sensiblement verticale sous cette plaque.

En remarque, le volume délimité par la surface supérieure de la plaque de multi-connexions 22 et le plancher 3 du véhicule est exploité pour le passage et la fixation d'éléments, comme les tuyaux d'alimentation 24 du fluide frigorigène, qui ont été mentionnés précédemment, ainsi que des tuyaux de conduite d'un liquide de frein, non représentés.

La batterie 10 comprend une surface supérieure 14 adaptée pour une coopération avec la plaque de multi-connexions 22, qui comprend des ouvertures 13 dont les dimensions et l'espacement correspondent aux ouvertures 23 de cette plaque 22. Des joints d'étanchéité 15 sont aménagés autour de ces ouvertures 13. Enfin, le boîtier de la batterie 10 comprend des parties planes de liaison 16 qui s'étendent latéralement sur toute la longueur des deux côtés de la batterie, à une hauteur inférieure à celle de la surface supérieure de liaison 14. Le plancher 3 du véhicule automobile comprend des surfaces latérales 8 plus basses que la surface du plancher dans sa zone centrale, destinée à coopérer avec ces surfaces latérales planes de liaison 16.

La figure 6 représente la configuration de fixation de la batterie 10 sous le plancher 3 du véhicule automobile. Dans cette configuration, les prolongements 28 des conduits 26, 27 viennent pénétrer dans les ouvertures 13 de la batterie 10, pour garantir une bonne circulation du flux de fluide caloporteur 21. En complément, les joints d'étanchéité 15 viennent en appui contre la surface plane inférieure de la plaque de multi-connexions 22, garantissant l'étanchéité de la liaison.

Il apparaît donc qu'un flux de fluide caloporteur 21 peut pénétrer dans la batterie par l'ouverture centrale 13, selon la direction E sensiblement verticale, orientée vers le bas, puis ressortir par les deux ouvertures latérales 13 selon la direction S sensiblement verticale orientée vers le haut. Les différentes cellules de production d'énergie 19 de la batterie sont ainsi contournées par le fluide caloporteur qui les refroidit. Les deux surfaces latérales 8, 16 du véhicule automobile et de la batterie 10 sont fixées entre elles par tout moyen, par exemple des vis 31.

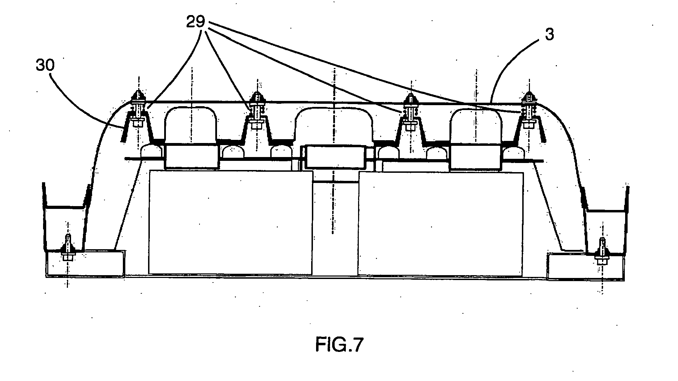

La figure 7 illustre une variante de réalisation dans laquelle la plaque de multi-connexions 22 est fixée de manière souple au plancher 3 du véhicule automobile, par l'intermédiaire d'éléments de liaison élastiques 29, comme des ressorts, pour absorber les dispersions géométriques des différents composants du système de liaison, et permettre une connexion précise. Pour cela, les ressorts agissent en pression sur la plaque d'interconnexion 22 pour garantir son contact sur toute sa surface avec la surface plane supérieure 14 de la batterie.

Le système de liaison de la batterie 10 sur le véhicule automobile permet aussi d'établir une liaison électrique 5 entre la batterie 10 et le véhicule automobile 1, et particulièrement son moyen d'entraînement 4 électrique. Cette liaison électrique 5 peut par exemple comprendre deux câbles haute-tension et un câble basse tension.

L'agencement de liaison électrique, visible sur la figure 1, repose sur une première partie liée à la batterie 10 et se présentant comme une embase 11 rigide, en métal, plastique très rigide, ou en matériau hybride comportant un mélange de métal et de plastique, notamment un matériau plastique comportant un treillis interne en métal, s'étendant horizontalement vers l'avant de la batterie 10. Cette embase 11 comprend un connecteur électrique 12. Ensuite, l'agencement de liaison électrique de la batterie comprend une seconde partie haute liée au véhicule automobile et coopérant avec l'embase 10, qui comprend un connecteur électrique 6 à l'extrémité de la liaison électrique 5 du véhicule automobile, destiné à coopérer avec le connecteur électrique 12 de l'embase 10. Dans ce mode de réalisation, le connecteur électrique 6 est un connecteur haute-tension comprenant une ou plusieurs broches 7 mâles et le connecteur électrique 12 sur l'embase 11 comprend la partie femelle correspondante.

L'agencement décrit ci-dessus d'une batterie 10 sous un véhicule automobile est amovible et prévu pour un échange rapide, automatisé, selon un mouvement sensiblement vertical de la batterie. Finalement, ce système de liaison entre la batterie et le véhicule automobile présente en outre les avantages suivants :
- il garantit l'étanchéité de la liaison, car l'eau, la boue ou la poussière endommagerait la batterie, et évite les fuites de fluide caloporteur du système de ventilation ;
- il permet la connexion simultanée et sans verrouillage particulier de plusieurs conduits du dispositif de ventilation, dans des zones peu accessibles ;
- il assure la résistance contre toutes les autres agressions comme le gravillonnage ;
- il est adapté à un cycle d'opérations de montage/démontage très irrégulier, qui peut s'étendre de quelques heures à plusieurs mois ;
- il est adapté pour de nombreuses opérations de montages/démontages de la batterie, de l'ordre de plusieurs milliers ;
- il permet une opération de montage ou démontage rapide d'une batterie, de l'ordre de quelques minutes ;
- il est adapté à tous les véhicules et tient compte des dispersions, tolérances de géométrie des différents composants du véhicule automobile et du système lui-même.

L'invention porte aussi sur un procédé de montage/démontage d'une batterie sur un véhicule automobile, qui comprend les étapes essentielles suivantes :
- Déplacement relatif dans une direction sensiblement verticale d'une batterie 10 par rapport à une surface inférieure 3 liée au véhicule automobile, par un dispositif de levage ;
- Connexion/déconnexion d'une liaison électrique entre deux connecteurs 12, 6 de respectivement une embase 11 liée au véhicule et une partie haute de liaison électrique liée au véhicule automobile ;
- Connexion/déconnexion d'une liaison de ventilation 13; 26, 27 vers la batterie 10 entre une surface supérieure de la batterie 14 et une plaque de multi-connexions 22 servant d'interface entre la batterie et un climatiseur 20 ;
- Connexion/déconnexion mécanique d'éléments de fixation 31 de la batterie 10 sur le véhicule automobile.

L'invention porte aussi sur un système de remplacement de batterie et une station de remplacement utilisant un tel système, qui comprend un dispositif de levage et éventuellement de déplacement d'une batterie ainsi qu'un outil pour réaliser la fixation et la libération mécanique d'une batterie sur un véhicule automobile, tout en réalisant la connexion électrique et de ventilation par un agencement de liaison tel que décrit précédemment. On peut prévoir un système de levage non pourvu de fonction de déplacement et uniquement limité à une fonction de levage, c'est-à-dire au déplacement sensiblement vertical de la batterie. La fonction de déplacement sera alors obtenue par un système de déplacement distinct pouvant soit déplacer la batterie à monter soit le véhicule sur laquelle on souhaite monter la batterie. Pour cela, des rails de convoyage peuvent être prévus pour des déplacements dans une direction horizontale dans le but d'amener la batterie sous un véhicule automobile à la verticale de sa future position. La fixation et libération mécanique de la batterie peut être effectuée par tout moyen de liaison, de manière automatisée, par un robot ou un dispositif de type toolbox universel, comprenant des interfaces de liaison et des moyens motorisés pour mettre en oeuvre l'actionnement d'outils de fixation et libération.

Naturellement, l'invention ne se limite pas au mode de réalisation décrit précédemment et il apparaît que de nombreuses autres architectures peuvent être envisagées. En variante, la batterie 10 pourrait être fixée dans un logement différent sous le véhicule automobile. De plus, le dispositif de ventilation pourrait présenter une autre géométrie. Le climatiseur pourrait ne pas être dédié mais être celui qui est aussi utilisé pour la thermique de l'habitacle par exemple. De même, le fluide caloporteur peut être de toute nature, et non obligatoirement dédié à la batterie mais peut être utilisé pour interagir avec d'autres composants du véhicule automobile. De plus, la plaque de multi-connexions peut prendre d'autres formes, et comprendre d'autres nombres de liaisons que les trois représentées, au moins deux.

Enfin, la solution a été illustrée pour le cas d'une batterie fixée de manière amovible sous un véhicule automobile, prévue pour de multiples opérations de montage et démontage pour permettre son remplacement quand elle est vide. Toutefois, elle reste adaptée pour les batteries fixes, non amovibles, destinées à rester en permanence dans leur logement au sein du véhicule automobile, et dont la recharge est prévue directement sur le véhicule automobile. La solution apporte l'avantage de faciliter la fixation de la batterie sur les chaînes de production, et de faciliter les opérations ultérieures de maintenance et réparations.

## Revendications

1. Système de liaison entre une batterie (10) d'alimentation et un véhicule automobile comprenant un dispositif de ventilation de la batterie (10), comprenant une plaque de multi-connexions (22) qui comprend des ouvertures (23), d'une part pour une liaison avec au moins deux conduits (26, 27) pour la circulation d'un fluide caloporteur, et d'autre part pour une liaison avec la batterie (10) de sorte de relier ces au moins deux conduits (26, 27) à un circuit de circulation intérieur de la batterie et **caractérisé en ce que** la plaque de multi-connexions est liée au véhicule automobile dans une partie arrière dudit véhicule, au niveau de l'assise du second rang prévue pour les passagers arrière du véhicule automobile.

2. Système de liaison entre une batterie (10) d'alimentation et un véhicule automobile selon la revendication précédente, **caractérisé en ce qu'**il comprend trois conduits (26, 27) sensiblement alignés dans une direction transversale vers l'arrière de la batterie, dont un conduit froid (26) central apte à une arrivée d'un fluide caloporteur et deux conduits chauds (27) latéraux aptes à une sortie du fluide caloporteur.

3. Système de liaison entre une batterie (10) d'alimentation et un véhicule automobile selon l'une des revendications précédentes, **caractérisé en ce que** les conduits (26, 27) pour la circulation d'un fluide caloporteur sont fixés sur une première surface supérieure de la plaque de multi-connexions (22), elle-même fixée sous le plancher (3) d'un véhicule automobile.

4. Système de liaison entre une batterie (10) d'alimentation et un véhicule automobile selon la revendication précédente, **caractérisé en ce que** la batterie (10) comprend une surface supérieure (14) comprenant des ouvertures (13) entourées de joints d'étanchéité (15) agencées pour correspondre aux ouvertures (23) de la plaque de multi-connexions (22) et permettre la connexion des conduits (26, 27) pour la circulation d'un fluide caloporteur avec un circuit de circulation intérieur de la batterie (10).

5. Système de liaison entre une batterie (10) d'alimentation et un véhicule automobile selon l'une des revendications précédentes, **caractérisé en ce qu'**il comprend une surface plane latérale (16) liée à la batterie et une surface latérale (8) liée au plancher (3) du véhicule automobile, prévues pour une liaison par des éléments de fixation (31).

6. Système de liaison entre une batterie (10) d'alimentation et un véhicule automobile selon l'une des revendications précédentes, **caractérisé en ce que** la plaque de multi-connexions (22) est fixée au plancher (3) du véhicule automobile par des éléments de fixation (30) délimitant un espace au-dessus de la surface supérieure de la plaque de multi-connexions (22) pour le positionnement des conduits (26, 27) d'un fluide caloporteur et la fixation de conduits (24) pour un fluide frigorigène.

7. Système de liaison entre une batterie (10) d'alimentation et un véhicule automobile selon la revendication précédente, **caractérisé en ce que** les éléments de fixation (30) comprennent des éléments élastiques (29) permettant une liaison souple au plancher (3) du véhicule automobile pour compenser les dispersions du système de liaison.

8. Système de liaison entre une batterie (10) d'alimentation et un véhicule automobile selon l'une des revendications précédentes, **caractérisé en ce qu'**il comprend une embase (11) s'étendant vers l'avant de la batterie (10) comprenant un connecteur électrique (12) coopérant avec un connecteur électrique (6) correspondant fixé sur le véhicule automobile.

9. Système de liaison entre une batterie (10) d'alimentation et un véhicule automobile selon l'une des revendications précédentes, **caractérisé en ce que** le système est apte à une connexion / déconnexion de la batterie (10) dans une direction sensiblement verticale.

10. Véhicule automobile comprenant une batterie (10) d'alimentation d'un moyen d'entraînement (4), **caractérisé en ce qu'**il comprend un système de liaison de sa batterie (10) d'alimentation selon l'une des revendications précédentes.

11. Véhicule automobile selon la revendication précédente, **caractérisé en ce qu'**il comprend un climatiseur pour le refroidissement de l'habitacle du véhicule automobile et un climatiseur (20) distinct pour le refroidissement de sa batterie (10) d'alimentation.

12. Véhicule automobile selon la revendication précédente, **caractérisé en ce que** le climatiseur (20) pour le refroidissement de sa batterie (10) d'alimentation est disposé en arrière de la batterie (10) d'alimentation et relié à la plaque de multi-connexions (22) par les conduits (26, 27) de fluide caloporteur.

13. Procédé de montage/démontage d'une batterie (10) sur un véhicule automobile (1), **caractérisé en ce qu'**il comprend les étapes suivantes :
- Déplacement relatif dans une direction sensiblement verticale d'une batterie (10) par rapport à une surface inférieure (3) liée au véhicule automobile, par un dispositif de levage ;
- Connexion/déconnexion d'une liaison électrique entre deux connecteurs (12, 6) de respectivement une embase (11) liée au véhicule et une partie haute de liaison électrique liée au véhicule automobile ;
- Connexion/déconnexion d'une liaison de ventilation (13 ; 26, 27) vers la batterie (10) entre une surface supérieure de la batterie (14) et une plaque de multi-connexions (22) d'un système de liaison selon l'une des revendications 1 à 9 servant d'interface entre la batterie (10) et un climatiseur (20) ;
- Connexion/déconnexion mécanique d'éléments de fixation (31) de la batterie (10) sur le véhicule automobile.

## Patentansprüche

1. Verbindungssystem zwischen einer Versorgungsbatterie (10) und einem Kraftfahrzeug, das eine Belüftungsvorrichtung der Batterie (10) enthält, das eine Platte von Mehrfachverbindungen (22) enthält, die Öffnungen (23) einerseits für eine Verbindung mit mindestens zwei Leitungen (26, 27) für die Zirkulation eines Wärmeträgerfluids und andererseits für eine Verbindung mit der Batterie (10) enthält, um diese mindestens zwei Leitungen (26, 27) mit einem inneren Zirkulationskreis der Batterie zu verbinden, und **dadurch gekennzeichnet, dass** die Platte von Mehrfachverbindungen mit dem Kraftfahrzeug in einem hinteren Teil des Fahrzeugs im Bereich der Sitzfläche der zweiten Reihe verbunden ist, die für die hinteren Fahrgäste des Kraftfahrzeugs vorgesehen ist.

2. Verbindungssystem zwischen einer Versorgungsbatterie (10) und einem Kraftfahrzeug nach dem vorhergehenden Anspruch, **dadurch gekennzeichnet, dass** es drei Leitungen (26, 27) enthält, die im Wesentlichen in einer Querrichtung zur Rückseite der Batterie hin fluchtend ausgerichtet sind, darunter eine zentrale Kaltleitung (26), die für einen Einlass eines Wärmeträgerfluids geeignet ist, und zwei seitliche Warmleitungen (27), die für einen Austritt des Wärmeträgerfluids geeignet sind.

3. Verbindungssystem zwischen einer Versorgungsbatterie (10) und einem Kraftfahrzeug nach einem der vorhergehenden Ansprüche, **dadurch gekennzeichnet, dass** die Leitungen (26, 27) für die Zirkulation eines Wärmeträgerfluids an einer ersten oberen Fläche der Platte von Mehrfachverbindungen (22) befestigt sind, die selbst unter dem Boden (3) eines Kraftfahrzeugs befestigt ist.

4. Verbindungssystem zwischen einer Versorgungsbatterie (10) und einem Kraftfahrzeug nach dem vorhergehenden Anspruch, **dadurch gekennzeichnet, dass** die Batterie (10) eine obere Fläche (14) enthält, die von Dichtungen (15) umgebene Öffnungen (13) enthält, die angeordnet sind, um den Öffnungen (23) der Platte von Mehrfachverbindungen (22) zu entsprechen und die Verbindung der Leitungen (26, 27) für die Zirkulation eines Wärmeträgerfluids mit einem inneren Zirkulationskreis der Batterie (10) zu ermöglichen.

5. Verbindungssystem zwischen einer Versorgungsbatterie (10) und einem Kraftfahrzeug nach einem der vorhergehenden Ansprüche, **dadurch gekennzeichnet, dass** es eine mit der Batterie verbundene ebene Seitenfläche (16) und eine mit dem Boden (3) des Kraftfahrzeugs verbundene Seitenfläche (8) enthält, die für eine Verbindung durch Befestigungselemente (31) vorgesehen sind.

6. Verbindungssystem zwischen einer Versorgungsbatterie (10) und einem Kraftfahrzeug nach einem der vorhergehenden Ansprüche, **dadurch gekennzeichnet, dass** die Platte von Mehrfachverbindungen (22) am Boden (3) des Kraftfahrzeugs durch Befestigungselemente (30) befestigt wird, die einen Raum oberhalb der oberen Fläche der Platte von Mehrfachverbindungen (22) für die Positionierung der Leitungen (26, 27) eines Wärmeträgerfluids und die Befestigung von Leitungen (24) für ein Kältemittel begrenzen.

7. Verbindungssystem zwischen einer Versorgungsbatterie (10) und einem Kraftfahrzeug nach dem vorhergehenden Anspruch, **dadurch gekennzeichnet, dass** die Befestigungselemente (30) elastische Elemente (29) enthalten, die eine biegsame Verbindung mit dem Boden (3) des Kraftfahrzeugs erlauben, um die Streuungen Verbindungssystems zu kompensieren.

8. Verbindungssystem zwischen einer Versorgungsbatterie (10) und einem Kraftfahrzeug nach einem der vorhergehenden Ansprüche, **dadurch gekennzeichnet, dass** es eine sich zur Vorderseite der Batterie (10) erstreckende Grundplatte (11) enthält, die einen elektrischen Verbinder (12) enthält, der mit einem entsprechenden elektrischen Verbinder (6) zusammenwirkt, der am Kraftfahrzeug befestigt ist.

9. Verbindungssystem zwischen einer Versorgungsbatterie (10) und einem Kraftfahrzeug nach einem der vorhergehenden Ansprüche, **dadurch gekennzeichnet, dass** das System für eine Verbindung/Trennung der Batterie (10) in einer im Wesentlichen senkrechten Richtung geeignet ist.

10. Kraftfahrzeug, das eine Versorgungsbatterie (10) einer Antriebseinrichtung (4) enthält, **dadurch gekennzeichnet, dass** es ein Verbindungssystem seiner Versorgungsbatterie (10) nach einem der vorhergehenden Ansprüche enthält.

11. Kraftfahrzeug nach dem vorhergehenden Anspruch, **dadurch gekennzeichnet, dass** es ein Klimagerät zur Kühlung des Innenraums des Kraftfahrzeugs und ein anderes Klimagerät (20) zur Kühlung seiner Versorgungsbatterie (10) enthält.

12. Kraftfahrzeug nach dem vorhergehenden Anspruch, **dadurch gekennzeichnet, dass** das Klimagerät (20) zur Kühlung seiner Versorgungsbatterie (10) hinter der Versorgungsbatterie (10) angeordnet und mit der Platte von Mehrfachverbindungen (22) durch die Leitungen (26, 27) von Wärmeträgerfluid verbunden ist.

13. Verfahren für den Einbau/Ausbau einer Batterie (10) an einem Kraftfahrzeug (1), **dadurch gekennzeichnet, dass** es die folgenden Schritte enthält:
- relative Verschiebung in einer im Wesentlichen senkrechten Richtung einer Batterie (10) bezüglich einer mit dem Kraftfahrzeug verbundenen unteren Fläche (3) durch eine Hubvorrichtung;
- Verbinden/Trennen einer elektrischen Verbindung zwischen zwei Verbindern (12, 6) einer mit dem Fahrzeug verbundenen Grundplatte (11) bzw. eines mit dem Kraftfahrzeug verbundenen oberen elektrischen Verbindungsteils;
- Verbinden/Trennen einer Belüftungsverbindung (13; 26, 27) zur Batterie (10) zwischen einer oberen Fläche (14) der Batterie und einer Platte von Mehrfachverbindungen (22) eines Verbindungssystems nach einem der Ansprüche 1 bis 9, das als Schnittstelle zwischen der Batterie (10) und einem Klimagerät (20) dient;
- mechanisches Verbinden/Trennen von Befestigungselementen (31) der Batterie (10) am Kraftfahrzeug.

## Claims

1. Connection system between a power-supply battery (10) and a motor vehicle comprising a device (10) for ventilating the battery, comprising a multiconnection plate (22) which comprises openings (23), on the one hand for a connection with at least two ducts (26, 27) for the circulation of a coolant, and, on the other hand, for a connection with the battery (10) so as to link these at least two ducts (26, 27) to an internal circulation circuit of the battery, **characterized in that** the multiconnection plate is linked to the motor vehicle in a rear portion of said vehicle, at the second-row seating provided for the rear passengers of the motor vehicle.

2. Connection system between a power-supply battery (10) and a motor vehicle according to the preceding claim, **characterized in that** it comprises three ducts (26, 27) substantially aligned in a transverse direction toward the rear of the battery, including one central cold duct (26) suitable for an inlet of a coolant and two lateral hot ducts (27) suitable for an outlet of the coolant.

3. Connection system between a power-supply battery (10) and a motor vehicle according to either of the preceding claims, **characterized in that** the ducts (26, 27) for the circulation of a coolant are attached to a first upper surface of the multiconnection plate (22), itself attached beneath the floor (3) of a motor vehicle.

4. Connection system between a power-supply battery (10) and a motor vehicle according to the preceding claim, **characterized in that** the battery (10) comprises an upper surface (14) comprising openings (13) surrounded by seals (15) arranged to correspond with the openings (23) of the multiconnection plate (22) and allow the connection of the ducts (26, 27) for the circulation of a coolant with an internal circulation circuit of the battery (10).

5. Connection system between a power-supply battery (10) and a motor vehicle according to one of the preceding claims, **characterized in that** it comprises a lateral flat surface (16) linked to the battery and a lateral surface (8) linked to the floor (3) of the motor vehicle, said surfaces being provided for a connection by fastening elements (31).

6. Connection system between a power-supply battery (10) and a motor vehicle according to one of the preceding claims, **characterized in that** the multiconnection plate (22) is attached to the floor (3) of the motor vehicle by fastening elements (30) delimiting a space above the upper surface of the multiconnection plate (22) for the positioning of the ducts (26, 27) of a coolant and the fastening of ducts (24) for a refrigerant.

7. Connection system between a power-supply battery (10) and a motor vehicle according to the preceding claim, **characterized in that** the fastening elements (30) comprise elastic elements (29) allowing a flexible connection to the floor (3) of the motor vehicle in order to compensate for the dispersions of the connection system.

8. Connection system between a power-supply battery (10) and a motor vehicle according to one of the preceding claims, **characterized in that** it comprises a socket (11) extending toward the front of the battery (10) comprising an electric connector (12) interacting with a corresponding electric connector (6) attached to the motor vehicle.

9. Connection system between a power-supply battery (10) and a motor vehicle according to one of the preceding claims, **characterized in that** the system is suitable for a connection/disconnection of the battery (10) in a substantially vertical direction.

10. Motor vehicle comprising a battery (10) for powering a driving means (4), **characterized in that** it comprises a system for connecting its power-supply battery (10) according to one of the preceding claims.

11. Motor vehicle according to the preceding claim, **characterized in that** it comprises an air conditioner for cooling the passenger compartment of the motor vehicle and a separate air conditioner (20) for cooling its power-supply battery (10).

12. Motor vehicle according to the preceding claim, **characterized in that** the air conditioner (20) for cooling its power-supply battery (10) is placed behind the power-supply battery (10) and is linked to the multiconnection plate (22) by the coolant ducts (26, 27).

13. Method for installing/removing a battery (10) on a motor vehicle (1), **characterized in that** it comprises the following steps:
- relative movement in a substantially vertical direction of a battery (10) relative to a lower surface (3) linked to the motor vehicle, by a lifting device;
- connection/disconnection of an electric connection between two connectors (12, 6) of respectively a socket (11) linked to the vehicle and a top portion of electric connection linked to the motor vehicle;
- connection/disconnection of a ventilation connection (13; 26, 27) to the battery (10) between an upper surface of the battery (14) and a multiconnection plate (22) of a connection system according to one of Claims 1 to 9 serving as an interface between the battery (10) and an air conditioner (20);
- mechanical connection/disconnection of fastening elements (31) for fastening the battery (10) to the motor vehicle.
